# EUROPEAN PATENT APPLICATION

(11) **EP 1 653 252 A2**
(43) Date of publication of application: **03.05.2006**
(21) Application number: 05110176.4
(22) Date of filing: 31.10.2005
(51) Int. Cl.: G01V 5/00

(54) **Versatile device for effecting safety controles via x-rays**

(30) Priority: 02.11.2004 IT MI20042086
(71) Applicant: GILARDONI S.p.A., 20124 Milano (IT)
(72) Inventor:
(74) Representative: Coppo, Alessandro

(57) **Abstract**

Electronic device for recognizing materials and objects comprising a scanning and processing modulus (2) which effects a scanning of X-ray images of said materials or objects which moves on a conveyor belt at a pre-established conveyance rate, and a display modulus (3) of said processed X-ray images, which reveal particular characteristics of said materials and objects.

## Description

The present invention relates to an electronic device for recognizing objects by determining specific characteristics of the material of which they are made.

In particular, the present invention relates to an electronic device for recognizing objects which uses X-ray scanning of the object and, through the image received by said scanning, determines said characteristics of the material, starting with the determination of information relating, for example, to the atomic number of the material itself.

In this way, it is possible to identify potentially dangerous substances or objects; the system, however, requires the presence of at least one operator for controlling the system and analysis of the luggage/object/package. It can therefore be applied to all enterprises which need to control objects, luggage, or more generally, packages which could be possibly introduced by an individual into an area subject to specific restrictions relating to transport/introduction of dangerous substances (for example explosives) or dangerous objects (for example knives): typical situations refer to airport departure terminals, law-courts, ocean terminals, railway stations, customs houses, monuments.

The X-ray technology makes it possible to determine various important characteristics of a material, i.e. its density and atomic number Z, or its equivalent atomic number Zeq if the material is made up of molecules. These two items of information can identify a material, but in order to be revealed contemporaneously, two different types of sensors are required.

Patent US 5,367,552 describes a system for recognizing objects effected by means of an X-ray radiation from which the densities of the objects subjected to said radiations are estimated.

Patent US 5,490,218 discloses a device and method for inspecting luggage based on the X-ray scanning of said luggage. In particular, in order to determine the presence of specific materials packed on top of each other inside said luggage, X-rays with different energies are used for irradiating the objects and it is evaluated whether the difference in the attenuation of the energy of said rays can be attributed to the presence of a different quantity of said material on a certain predefined area.

A basic factor for estimating the convenience of the various competitive technologies is the control "cost", in addition, obviously, to its quality and reliability, both in terms of "materials" and "rapidity".

The system proposed in the present invention is versatile in the sense that an increase in the number of ingoing luggage items/objects/packages, does not correspond to an increase in the overall analysis time. The device proposed, in fact, on the basis of the volume of controls to be effected, increases the scanning rate, whereas the performances remain practically unaltered, allowing more items of luggage/objects/packages to be analyzed with respect to a conventional system, in the same time.

As the scanning rates can reach values incompatible with a display at the real moving rate of luggage/objects/packages, the device according to the present invention comprises various "display units" on which, the images of the objects moving at a virtual rate compatible with the response times of a human operator, are displayed with a "circular buffer" logic. The device in question consists of a tunnel in which the luggage/objects/packages are scanned, and various remote display stations. This allows the performances of several systems to be obtained, each consisting of a tunnel and control station functioning contemporaneously and at a fixed rate, thus allowing a saving in terms of occupied space, energy consumption, the number of people necessary for the analysis. At the same time, the aid of the recognition function of dangerous materials such as explosives is always guaranteed.

One of the aspects of the present invention relates to an electronic device for recognizing objects comprising a scanning and processing modulus which effects a scanning of X-ray images of said objects which move on a conveyor belt at a pre-established conveyance rate, and a display modulus of said processed X-ray images, which reveal particular characteristics of said objects, characterized in that said display modulus comprises at least two remote display stations and said scanning and processing modulus comprises a server unit which is capable of determining and varying said pre-established conveyance rate and distributing said processed X-ray images in a synchronized manner on the display stations.

The characteristics and advantages of the device according to the present invention will appear more evident from the following illustrative and nonlimiting description of an embodiment with reference to the enclosed drawings in which:

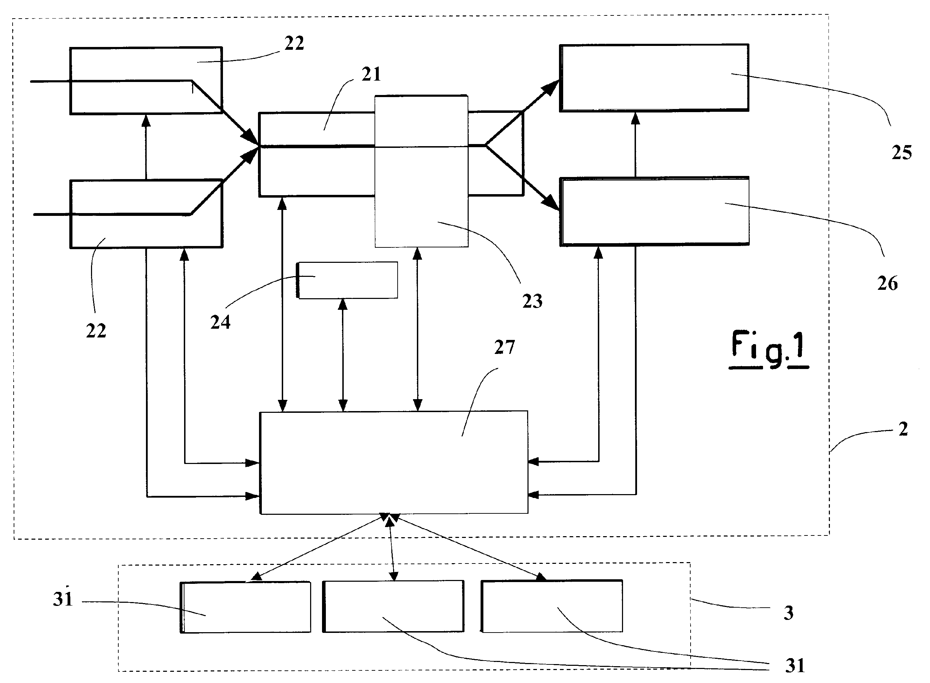

figure 1 is a basic scheme of the electronic device according to the present invention.

With reference to the above figure, the electronic device for recognizing objects according to an embodiment of the present invention, comprises a scanning and processing modulus 2 of objects, which effects a scanning of X-ray images of said objects which move on a conveyor belt at a pre-established conveyance rate and a display modulus 3 comprising three display stations 31 of said processed X-ray images, which reveal specific characteristics of said objects.

In the embodiment example of figure 1, three display stations are illustrated; it is understood that the present invention can be applied to electronic devices for the recognition of objects having at least two display stations.

The electronic scanning and processing modulus 2 substantially comprises a main conveyor belt 21 for luggage, to which an acquisition unit 23 of the X-ray images generated by an X-ray source 24 are sent by means of secondary or auxiliary conveyor belts 22.

The scanning modulus also comprises an additional outgoing conveyor belt for controlled objects 25 which do not require further analysis and an outgoing conveyor belt for further potentially dangerous objects 26 which consequently require additional controls.

The electronic running of said scanning and processing modulus is effected by a server unit 27 which handles the correct flow of information also to the display stations 31, identified as "client" stations.

The scanning modulus also comprises a power block which has the function of feeding the whole device and contains a key switch for the switching on or off of the whole device, a continuity group (hereafter called UPS) which guarantees the feeding of the server if there is an interruption in the power supply.

The UPS group is handled, under nominal conditions, by the server unit by means of an electronic power control block which has the central role of: switching on/off of the various subsystems, on commands received from the server unit and handling of a synchronization signal coming from the server unit.

The scanning and processing modulus also comprises a sensor (for example an encoder) destined for acquiring the relative position/speed of the main conveyor belt and optical switches for the interception of luggage/objects/packages on the main conveyor belt.

The server unit 27 controls the movement of the main conveyor belt on the basis of the detections of the sensor, with the possibility of establishing different speeds of the conveyor belt itself.

Furthermore the server unit effects the diagnostics of the whole device.

In short, the communications between said scanning and processing modulus and said display modulus are of the "client-server" type.

The server unit 27 acquires the data preferably synchronously and distributes them appropriately to the display stations (Client), it handles and controls all the various groups and blocks of the scanning and processing modulus and, in some cases, also serves as client; it is normally based on a mono/multi-processor Personal Computer, equipped with an internal mass memory and a series of electric interfaces for the control/running of the moduli. The "client" display stations effect operations necessary for visualizing the radiogenic images and information map relating to the equivalent atomic number, allowing, if necessary and after confirmation on the part of the operator and with an exchange of information with the server, the activation of the procedures suitable for subjecting the suspicious luggage/object/package to further analysis.

The server, with the information received from the "client" and by acting on the conveyor belt for the luggage to be further controlled, typically supplies a unit outside the device with commands for allowing further analysis of the luggage/object/package itself.

The X-ray image acquisition unit envisages the presence of at least two separate sensor units, each comprising a series of photodiodes parallel to each other, separated by a metallic filter. Each unit is suitable for detecting a pre-established spectral distribution of said rays. In this way each unit of sensors provides an X-ray image relating to a different energy spectrum. These images are indicated hereunder together with the data associated therewith, as high energy images (H) and low energy images (L).

These images are sent to the server unit which extracts specific information on the materials of which the object present in the H and L images is composed.

Said server unit handles the resulting transmission of images, in which each specific characteristic of the material, for example information relating to the Zeq atomic number, and object analyzed in general, is revealed in a distinguishable manner, at the various display stations, respecting the temporization with which the images were scanned by the main conveyor belt.

In this way, the device has the possibility of being able to modify the conveyance rate of the luggage/objects/packages inside the main control conveyor belt (in relation to the entity of the conveyance of the objects to be controlled) with a consequent sorting of the images at the display and remote control stations (Client) in a number proportional to the conveyance rate of the luggage/objects/packages.

As the architecture proposed is extremely flexible, there is a configuration with a sole operator and wherein the "Client" and "Server" can co-exist on a single platform; from an operative point of view, this configuration is normal used with a fixed rate.

If there are various remote display stations in relation to the pre-selected configuration, the rate of the main conveyor belt is modified (and consequently the "scanning" rate) and the data acquisition and transmission system is reprogrammed.

Let us consider, for example, the situation illustrated in figure 1, when the three remote display terminals are activated, the following functions are exerted:
a) the conveyor belt is configured with a rate equal to three times the reference value;
b) the acquisition subsystem is programmed so as to generate three times the quantity of data normally generated;
c) the X-ray image and Zeq map of a first item of luggage/object/package are shown on the first terminal;
d) the X-ray image and Zeq map of a second item of luggage/object/package are shown on the second terminal;
e) the X-ray image and Zeq map of a third item of luggage/object/package are shown on the terminal;
f) the X-ray image and Zeq map of a fourth item of luggage/object/package are shown on the terminal;
g) the X-ray image and Zeq map of a fifth item of luggage/object/package are shown on the terminal, and so forth.

It should be pointed out that on each remote display station, the image and information map relating to the equivalent atomic number are displayed for a time equal to that when the scanning rate is equal to the reference rate.

As there is the possibility of there being objects considered dangerous on each item of luggage /object/package, the system is capable of providing commands to external systems which allow the sorting of the luggage/object/package towards further systems which can effect additional analysis/controls.

## Claims

1. An electronic device for recognizing materials or objects comprising a scanning and processing modulus (2) which effects a scanning, providing X-ray images of said materials or objects which move on a conveyor belt at a pre-established conveyance rate, and a display modulus (3) of said processed X-ray images, which reveal particular characteristics of said objects or materials,
**characterized in that**
said display modulus comprises one or more remote display stations,
said scanning and processing modulus comprises a server unit which is capable of determining and varying said pre-established conveyance rate and acquiring said processed X-ray images in a synchronized manner with the conveyance rate and distributing them with sequential logic to the display stations.

2. The electronic device according to claim 1, wherein said specific characteristics of the objects or materials are represented by information relating to the Zeq equivalent atomic number of the materials of which said objects or materials themselves are composed.

3. The electronic device according to claim 1, wherein said display stations show a map of the object representing the Zeq value measured.

4. The electronic device according to claim 1, wherein said display stations show a processed X-ray image of said objects.

5. The electronic device according to claim 1, wherein said X-ray images have a quality comparable to those obtained with printing techniques of X-ray images on films.

6. The electronic device according to claim 1, wherein said X-ray images and maps are also represented with moving objects or materials and regardless of their length.

7. The electronic device according to claim 1, wherein the communications between said scanning and processing modulus and said display modulus are of the "client-server" type.

8. The electronic device according to claim 1, wherein said scanning and acquisition modulus comprises a main conveyor belt (21) for luggage, to which the objects or materials are sent from secondary or auxiliary conveyor belts (22), an acquisition unit (23) of the X-ray images generated by an X-ray source (24).

9. The electronic device according to claim 1, wherein the scanning modulus also comprises a selection and sorting articulation on various belts of the objects or materials which require (25) or do not require (26) further analysis.

10. The electronic device according to claim 1, wherein the scanning modulus comprises a power block which has the function of feeding the whole device and contains a key switch for the switching on and off of the whole device, a continuity group which guarantees the feeding of the server if there is an interruption in the power supply.

11. The electronic device according to claim 1, wherein the scanning and processing modulus comprises a sensor suitable for acquiring the relative position/rate of the main conveyor belt and optical switches for the interception of luggage/objects/packages on the main conveyor belt.

12. The electronic device according to claim 1, wherein the server unit controls the movement of the main conveyor belt with the possibility of establishing different rates of the conveyor belt itself.

13. The electronic device according to claim 1, wherein the X-ray image and relative Zeq map remain on each remote display station for a fixed time, regardless of the conveyance rate of the objects on the main conveyor belt.
